# FASCICULE DE BREVET EUROPEEN

(11) **EP 0 780 012 B1**
(45) Date de publication et mention de la délivrance du brevet: **28.10.1998**
(21) Numéro de dépôt: 95930350.4
(22) Date de dépôt: 08.09.1995
(51) Int. Cl.: G07F 7/12, G07C 9/00

(54) **PROCEDE ET AGENCEMENT POUR DONNER SELECTIVEMENT UN ACCES DANS UN SYSTEME DE SECURITE**
VERFAHREN UND ANORDNUNG ZUM ERMÖGLICHEN VON SELEKTIVEM ZUGANG IN EIN SICHERHEITSSYSTEM
METHOD AND ARRANGEMENT FOR PROVIDING SELECTIVE ACCESS TO A SECURITY SYSTEM

(30) Priorité: 09.09.1994 BE 9400813
(43) Date de publication de la demande: 25.06.1997
(73) Titulaire: PROTON WORLD INTERNATIONAL en abrégé PWI, 1130 Bruxelles (Haren) (BE)
(72) Inventeur: MOULART, Yves, B-1190 Bruxelles (BE); DAWIRS, Michel, B-1970 Wezembeek Oppem (BE)
(74) Mandataire: Claeys, Pierre
(86) Numéro de dépôt international: BE9500080
(87) Numéro de publication internationale: WO9607994

(56) Documents cités:
- EP-A- 0 171 323
- EP-A- 0 219 060
- EP-A- 0 265 728
- EP-A- 0 372 285
- WO-A-90/15211
- DE-A- 3 706 954
- FR-A- 2 536 781
- FR-A- 2 681 165

## Description

La présente invention concerne un procédé pour donner sélectivement un accès dans un système de sécurité, notamment dans un système de payement par carte de débit, de crédit, ou par prélèvement de valeurs monétaires contenues dans une carte dite intelligente, en particulier une carte à puce, le système comportant au moins un premier dispositif et au moins un second dispositif qui doivent être mis en correspondance pour obtenir l'accès et l'accès étant obtenu par vérification de ce qu'une clé cryptographique que comporte le second dispositif est reconnue comme étant valide par le premier dispositif, après une comparaison à une clé que ce dernier comporte, le procédé comprenant :
- un renouvellement successif, à des intervalles de temps choisis, de la clé du premier dispositif, la nouvelle clé de celui-ci étant liée à la précédente par une fonction,
- si la comparaison de la clé renouvelée du premier dispositif et de la clé du second dispositif ne vérifie pas que cette dernière est valide, une recherche successive, par l'intermédiaire de la fonction répétée, des clés précédentes du premier dispositif pour les comparer successivement à celle du second dispositif, et
- si cette comparaison successive ne vérifie pas la validité de la clé du second dispositif, un blocage de l'accès.

La EP-A-0 265 728 décrit, dans le cadre d'un dispositif d'actionnement à distance d'une installation de verrouillage central de portes de véhicule automobile, un procédé de sécurisation de cet actionnement pour ne le permettre que par un émetteur correspondant au récepteur du dispositif. A cet effet, dans le procédé de la EP-A-O 265 728, on part d'un mot-code de départ ou clé (Ur-code-Wort) mémorisé (mémoire 1) dans l'émetteur et, à partir de ce mot-code, de nouveaux mots-codes sont fabriqués par une fonction. Dans une mémoire 19 du récepteur, le même mot-code de départ ou clé est mémorisé et de même, à partir de ce mot-code, de nouveaux mots-codes sont fabriqués d'une façon identique, pas à pas, d'une manière synchronisée à la fabrication dans l'émetteur. Ces fabrications de mots-codes apparaissent être faites toujours et uniquement dans un sens vers un mot-code futur et, en cas de désynchronisation entre l'émetteur et le récepteur, celui dont la fabrication de clé est en retard par rapport à celle de l'autre tente d'abord de "rattraper" celle en avance. La fabrication telle qu'expliquée permet en outre de resynchroniser les mots-codes de l'émetteur et du récepteur par l'intermédiaire de divers moyens, comme par exemple en parcourant toute une série de mots-codes qui se ferme sur elle-même en boucle ou en repartant du mot-code de départ. La fonction utilisée pour passer d'un mot-code au suivant n'est pas expliquée plus en détail dans ce document.

Par exemple, dans des systèmes de payement par prélèvement de valeurs monétaires enregistrées dans une carte de crédit que l'on peut dénommer "porte-monnaie électronique" et qui constitue le second dispositif ci-dessus, le premier dispositif comporte des terminaux de payement qui possèdent chacun une ou plusieurs clés cryptographiques dites "globales" parce que communes à plusieurs terminaux de payement. Chaque porte-monnaie électronique comporte, outre d'éventuels codes de sécurité, une mémoire pour les valeurs monétaires, qui peut être vidée progressivement ou en une fois et qui peut être rechargée par exemple à l'aide d'un terminal d'ordinateur d'une banque, ainsi qu'une mémoire pour une ou plusieurs clés cryptographiques. La description ci-dessous est donnée, à titre d'explication, pour une clé cryptographique. Une ou des autres clés peuvent être traitées comme suit ou suivant d'autres procédures adéquates.

Lorsqu'un payement doit être effectué, le porte-monnaie électronique est mis en communication avec un terminal de payement et celui-ci, avant d'exécuter un prélèvement de valeurs monétaires dans le porte-monnaie électronique, et éventuellement en plus d'un contrôle de codes de sécurité, calcule la clé supposée du porte-monnaie sur base de la clé globale que ce terminal possède et sur base d'un code identifiant univoquement le porte-monnaie (par exemple un numéro de série de celui-ci) et le terminal vérifie que cette clé supposée correspond à celle qui est mémorisée dans le porte-monnaie électronique et qui y a été chargée lors de la fabrication ou émission de ce dernier. Ce calcul est fait avec un algorithme choisi, suivant l'invention, pour que le calcul soit fait avec un algorithme choisi pour que le calcul soit irréversible, c'est-à-dire qu'en connaissant la clé du porte-monnaie et son code, il n'est pas possible de retrouver la clé globale.

Bien que ce calcul irréversible ne permette pas à un tiers qui a décrypté la clé et le code d'un porte-monnaie de retrouver la clé globale, le tiers pourrait essayer de se procurer frauduleusement la clé globale présente dans de nombreux terminaux et, à partir de cette clé, calculer les clés de tous les porte-monnaie du système en obtenant ou inventant les codes les identifiant, puis émettre de faux porte-monnaie indiscernables des vrais. De tels actes sont préjudiciables pour la société et très coûteux à surveiller et combattre. A l'extrême, ils pourraient mener à l'obligation d'arrêter l'utilisation du système précité.

La présente invention a pour but de limiter davantage par exemple des falsifications de porte-monnaie électroniques du genre cité ci-dessus et donc les inconvénients graves qui en résultent. Pour limiter cela et augmenter ainsi la sécurité du système, il est nécessaire de pouvoir changer, d'une façon programmée dans le temps, la clé globale des terminaux de payement et cela est réalisé facilement puisque ces terminaux sont régulièrement en liaison avec un centre de gestion. Cependant, il faut aussi mettre à jour la clé mémorisée dans les porte-monnaie électroniques du système, mais ceux-ci ne sont pas tous présentés de façon suffisamment régulière à un terminal de payement ou de banque pour que leur clé cryptographique soit changée en "synchronisme" avec celles des terminaux de payement.

Pour résoudre ce problème de changement en synchronisme, le procédé suivant l'invention comporte l'utilisation d'une fonction irréversible par laquelle, à partir d'une clé déterminée, on ne peut obtenir chaque fois que la clé précédente dans la succession du renouvellement et, par répétition de la fonction, les clés précédentes éventuelles.

La présente invention a également pour objet un agencement pour la mise en oeuvre du procédé suivant l'invention et comportant au moins un premier dispositif et au moins un second dispositif,
* le second dispositif comportant des moyens de stockage d'une clé,
* le premier dispositif comportant
   - des moyens de stockage d'une clé,
   - des moyens de production d'une nouvelle clé pour le premier dispositif, ces moyens de production étant reliés aux moyens de stockage pour y remplacer une clé par la nouvelle clé et étant agencés pour que la nouvelle clé soit chaque fois liée à la précédente par une fonction irréversible par laquelle, à partir d'une clé déterminée on ne peut obtenir chaque fois que la clé précédente dans la succession du renouvellement et, par une répétition de la fonction, les clés précédentes éventuelles,
   - des moyens de répétition de la fonction irréversible pour retrouver les clés précédentes du premier dispositif, ces moyens de répétition étant reliés aux moyens de production, et/ou aux moyens de stockage,
   - des moyens de comparaison des clés renouvelée et précédentes du premier dispositif et de la clé du second dispositif, ces moyens de comparaison étant reliés aux moyens de stockage et de répétition,
   - des moyens de blocage de l'accès, reliés aux moyens de comparaison, et
   - des moyens de remplacement éventuel de la clé stockée dans les moyens de stockage du second dispositif par une clé plus récente dans la succession du renouvellement des clé, ces moyens de remplacement étant raccordés aux moyens de répétition et aux moyens de blocage.

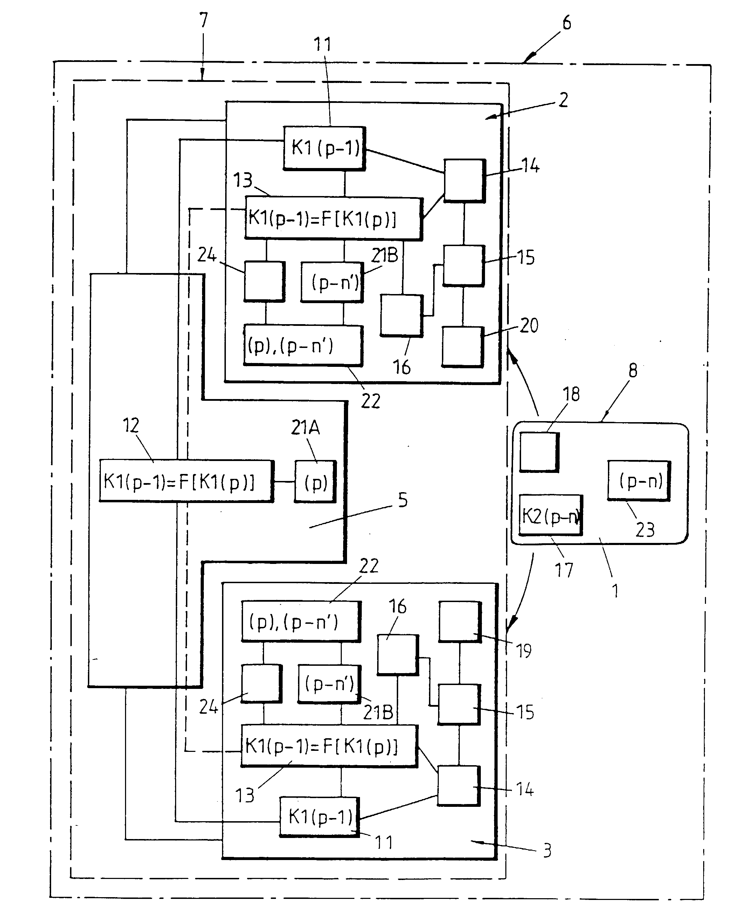

D'autres détails et particularités de l'invention ressortiront des revendications secondaires et de la description du dessin qui illustre, à titre d'exemple non limitatif le procédé et une forme particulière de l'agencement suivant l'invention, dans le cadre d'un payement par porte-monnaie électronique.

La figure unique représente un schéma fonctionnel simplifié d'un système de sécurité mettant en oeuvre le procédé et l'agencement de l'invention.

Le procédé de l'invention peut être avantageusement utilisé pour augmenter par exemple la sécurité d'un payement par porte-monnaie électronique 1 (qui peut être ce que l'on dénomme une carte à puce) et peut être utilisé seul ou en combinaison avec d'autres procédés de sécurité. Un moyen connu pour accroître ce genre de sécurité consiste à changer de façon programmée dans le temps la clé globale du système. Ce changement est aisé pour un terminal de payement 2 et pour un terminal de rechargement 3 du porte-monnaie électronique 1 qui servent respectivement à prélever de façon électronique, pour un payement par cette voie, de la "monnaie" enregistrée dans le porte-monnaie électronique, et à regarnir ce même porte-monnaie en "monnaie" en la prélevant, par exemple de façon électronique, d'un compte en banque. En effet, le terminal de payement 2 et celui de rechargement 3 sont régulièrement mis en communication avec un centre de gestion 5 du système de payement et de sécurité, comportant les éléments 1 à 5 précités, qui peut organiser ledit changement de clé.

Le cas du porte-monnaie électronique 1 est particulier du fait que ce dernier peut ne pas être utilisé de façon régulière et qu'entre deux utilisations successives, plusieurs changements de clé globale des terminaux de payement 2 peuvent avoir eu lieu alors que le porte-monnaie électronique 1 contient une clé périmée de ce fait.

Pour résoudre ce problème, on pourrait imposer au porteur d'un tel porte-monnaie électronique 1 de faire valider ce dernier par exemple par un terminal bancaire ou de rechargement 3 avant d'en autoriser une nouvelle utilisation pour un payement par un terminal de payement 2. Cependant, le porteur de ce porte-monnaie électronique 1 n'apprendra que la clé de celui-ci n'est plus valide, et doit être validée, qu'en subissant un refus de payement, par exemple dans un magasin avec les conséquences diverses que l'on peut imaginer, alors que ce porteur peut être de bonne foi. Cette situation aura tôt fait de décourager l'utilisation du système de payement 6.

Pour éviter entre autres ce genre d'inconvénient, au moins dans une majorité de cas, l'invention propose le procédé suivant.

Le système de payement et de sécurité 6 peut être considéré comme comportant un premier dispositif 7, qui comprend entre autres le centre de gestion 5, au moins un terminal de payement 2 et au moins un terminal de rechargement ou bancaire 3, et un second dispositif 8 qui est constitué essentiellement par le porte-monnaie électronique 1 réalisé par exemple sous la forme de ladite carte à puce.

Pour améliorer la sécurité du système, le procédé de la présente invention prévoit un renouvellement successif, à des intervalles de temps choisis, de la clé globale K1 mémorisée dans le premier dispositif 7, c'est-à-dire dans tous les terminaux de payement 2 et de rechargement 3, ce renouvellement étant par exemple effectué à partir du centre de gestion 5, lors de la mise en communication régulière de celui-ci avec ces terminaux 2, 3. Une nouvelle clé globale K1(p) mémorisée dans le terminal de payement 2 à une période de temps (p) est liée à la clé globale précédente K1(p-1) de la période immédiatement précédente (p-1) par une fonction irréversible F par laquelle, à partir de la clé déterminée K1(p), on ne peut obtenir chaque fois que la clé K1(p-1) immédiatement précédente dans la succession de renouvellement des clé K1. Par répétition de cette fonction F, on peut alors obtenir également la clé K1(p-2) à partir de la clé K1(p-1), et ainsi de suite.

L'irréversibilité de la fonction F est choisie pour qu'à partir d'une clé K1(p) il ne soit pas possible de déterminer une clé future K1(p+1), K1(p+2), etc pour les périodes suivantes (p+1), (p+2), etc.

Suivant l'invention, si la clé K2(p-n), où n est un nombre entier égal ou supérieur à zéro, du porte-monnaie électronique 1 n'est pas considérée comme valide lors de la comparaison, effectuée au cours de la période (p), à la clé K1(p) du terminal de payement 2, une recherche successive est effectuée, chaque fois par l'intermédiaire de la fonction irréversible F, afin de retrouver pas à pas, depuis la clé K1(p), les clés K1(p-1), K1(p-2), etc., précédentes du système de sécurité 6 pour les comparer successivement et au fur et à mesure à la clé K2(p-n) dudit porte-monnaie 1.

Si la comparaison successive donne une vérification de ce que la clé K2(p-n) est valide, par exemple égale à K1(p-n), et, le cas échéant, si d'autres conditions d'accès éventuelles sont satisfaites, l'accès au prélèvement de monnaie dans le porte-monnaie 1 est autorisé de façon que le terminal 2 peut effectuer un payement pour un montant à concurrence du maximum que contient ce porte-monnaie 1.

Si la comparaison successive ne vérifie pas la validité de la clé K2(p-n), un blocage de l'accès au prélèvement est organisé.

De préférence, si la comparaison successive vérifie la validité de la clé K2(p-n) du porte-monnaie 1, le procédé de l'invention prévoit un remplacement de cette clé K2(p-n) par une des clés du terminal de payement 2 plus récentes que la clé K2(p-n). La nouvelle clé injectée dans ledit porte-monnaie 1 pourrait être la clé K2(p) correspondant à la clé K1(p) du terminal de payement à la période (p) du prélèvement accepté. Il peut cependant être préféré d'injecter dans le porte-monnaie 1 une clé K2(p-1) correspondant à la clé K1(p-1) de la période (p-1) précédente dans la succession des renouvellements de clés. Ainsi, si un autre terminal de payement 2 du système 6 n'avait pas encore subi la dernière mise à jour et avait encore en mémoire la clé K1(p-1) et si le porte-monnaie 1 qui vient de recevoir la nouvelle clé K2(p-1) était mis en correspondance avec cet autre terminal 2, la validité de ce porte-monnaie 1 ne serait pas contestée. Cette validité n'aurait cependant pas été reconnue si le porte-monnaie 1 avait contenu une clé K2(p) et l'autre terminal 2 une clé K1(p-1) puisque la fonction F est irréversible et qu'elle utilise la clé K1(p-1) de l'autre terminal 2 pour remonter dans le passé et chercher des clés précédentes : cette fonction F ne permet pas de trouver une clé future et elle ne permet pas non plus d'utiliser la clé K2(p) du porte-monnaie 1 pour la recherche de clés précédentes.

Avantageusement, le procédé de l'invention prévoit que les recherches et comparaisons successives de clés K1(p-n) précédentes du système de sécurité sont bloquées à partir d'un degré d'ancienneté maximale admise m (nombre entier supérieur à zéro). A ce moment, le système 6 ne peut plus traiter que des clés K1(p-n) pour lesquelles 0 ≤ n ≤ m, de façon à :
- empêcher une validation, par le terminal de payement 2, d'un porte-monnaie 1 qui n'a plus servi depuis longtemps, celui-ci pouvant par exemple être validé alors par un terminal de banque ou par un terminal de rechargement 3 après constat de ce que ce porte-monnaie 1 n'est pas frauduleux, et par cela
- restreindre au maximum une éventuelle prolifération de porte-monnaie 1 frauduleux fonctionnant sur base d'une clé K2(p-n) ancienne et que les utilisateurs conscients de la fraude ne présenteront pas à un contrôle de validation tandis que des utilisateurs non conscients de la fraude, présentant à un contrôle ledit porte-monnaie pour une validation, pourraient aider à déceler la filière de la fraude.

La comparaison des clés K1(p-n) et K2(p-1), peut être immédiate, avec égalité ou coïncidence pure de celles-ci. Cette comparaison peut être indirecte et alors, par exemple, la fonction F utilise par exemple en plus un code auxiliaire mémorisé dans le porte-monnaie 1 ou encore le résultat de la fonction F est traité par exemple par une autre fonction utilisant ce code auxiliaire ou un autre paramètre, etc.

Les numéros d'ordre (p), (p-1),... (p-n),... donnés ci-dessus aux clés K1 et K2 ne le sont qu'à titre indicatif de leur ordre de succession. Suivant un mode de réalisation de l'invention, les clés K1 et K2 sont enregistrées de part et d'autre sans numéro d'ordre d'aucun type et la recherche et la comparaison de clés K1 et K2 coïncidentes se fait sans guide. Dans un autre mode de réalisation, des numéros d'ordre (p-n) sont donnés aux clés K1, K2 successives utilisées et liées par la fonction irréversible F. En même temps que la clé K1, K2 est mémorisée respectivement dans le premier ou dans le second dispositif 7, 8, le numéro d'ordre (p-n) correspondant à la clé K1, K2 mémorisée est inscrit dans le dispositif 7, 8 respectif et le numéro d'ordre (p-n) de la clé K2(p-n) est utilisé pour la recherche successive de la clé K1(p-n) à lui comparer, par exemple pour savoir combien de fois doit être répétée la fonction F. Ce numéro d'ordre peut également être utilisé pour déterminer immédiatement, sans recherche et comparaison, le degré d'ancienneté n du porte-monnaie 1 par rapport à la période (p) précitée et pour comparer ce degré à un degré d'ancienneté maximale admise m au-delà duquel sont bloquées les recherches et comparaisons précitées.

L'homme du métier comprend qu'étant donné la fonction irréversible F précitée, il est établi tout d'abord dans le centre de gestion une "dernière" clé cryptographique K1(fin) qui en principe sera la clé de la dernière période de vie, sinon de tout le système de sécurité 6, au moins de l'ensemble des clés K1(p) et K2(p) liées par la fonction F, et éventuellement de la fonction F elle-même. Ensuite, la fonction F est appliquée à cette clé K1(fin) pour en obtenir la clé K1(fin-1), à la clé K1(fin-1) pour en obtenir la clé K1(fin-2) et ainsi de suite jusqu'à obtenir la clé K1(1) de ce que l'on choisi comme première période. Cette clé K1(1) est alors chargée dans le terminal de payement 2 et, le cas échéant, dans le terminal de rechargement 3 et sa correspondante pour cette première période K2(1) est chargée dans le porte-monnaie 1 à la fabrication ou émission de celui-ci. Le centre de gestion 5 conserve au secret soit toute la série de clés K1(p), de K1(1) à K1(fin), ainsi obtenues, soit au moins la dernière K1(fin) à partir de laquelle n'importe quelle(s) clé(s) précédente(s) K1(p) peut (peuvent) être retrouvée(s).

Le nombre total de clés K1(p) de la série doit être choisi pour que la durée de vie dudit système de sécurité 6 par clé cryptographique soit inférieure à la somme des périodes correspondantes ou, si les périodes (p) successives sont de durée égale, au produit de la durée d'une période et du nombre total de clés K(p).

Un agencement de la présente invention pour la mise en oeuvre du procédé de l'invention peut comporter dans une forme simple de réalisation un premier dispositif 7 mentionné ci-dessus et comprenant par exemple les éléments 2, 3 et 5 précités. Ce premier dispositif 7 comporte en outre
- des moyens de stockage 11 (ou mémoire) de la clé K1(p-1) pour une période (p-1), ces moyens de stockage 11 étant agencés par exemple dans les terminaux de payement 2 et de rechargement 3, ces moyens de stockage 11 pouvant stocker également des clés K1(p-n) d'au moins quelques périodes successives précédentes afin de limiter une répétition trop fréquente de la fonction F,
- des moyens de production 12 d'une nouvelle clé K1(p) pour la période suivante (p), pour le premier dispositif 7, ces moyens de production 12 étant de préférence agencés dans le centre de gestion 5 et étant reliés aux moyens de stockage 11 pour pouvoir y remplacer une clé K1(p-1) par la nouvelle clé K1(p) et étant agencés pour que cette dernière soit chaque fois liée à la précédente K1(p-1) par la fonction irréversible F précitée,
- des moyens de répétition 13 de la fonction irréversible F, reliés aux moyens de production 12 précités et/ou aux moyens de stockage 11, pour retrouver successivement les clés précédentes K1(p-n) du premier dispositif 7,
- des moyens de comparaison 14 des clés renouvelées K1(p) et des précédentes K1(p-n) et de la clé K2(p-n) du second dispositif 8 précité, ces moyens de comparaison 14 étant reliés aux moyens de stockage 11,
- des moyens de blocage de l'accès 15, reliés aux moyens de comparaison 14 pour bloquer un accès à un prélèvement de monnaie à partir d'un porte-monnaie 1 non validé, les moyens de répétition 13, de comparaison 14 et de blocage 15 pouvant être prévus dans chaque terminal 2, 3, et
- des moyens de remplacement 16 pour remplacer, le cas échéant, dans des moyens de stockage 17 du second dispositif, la clé K2(p-n) stockée par une clé K2(p-n') plus récente dans la succession du renouvellement des clés, ces moyens de remplacement 16 étant raccordés aux moyens de répétition 13, pour en recevoir un ordre de remplacement de clé, et aux moyens de blocage 15, pour bloquer le cas échéant un remplacement d'une clé K2(p-n) jugée trop ancienne.

L'agencement de l'invention comporte aussi le second dispositif 8 déjà expliqué ci-dessus et comprenant lesdits moyens de stockage 17 de la clé K2(p-n) précitée qui peuvent être mis en correspondance, pour la lecture et pour l'enregistrement de la clé K2(p-n), avec le terminal 2 ou 3. De plus, le second dispositif 8, lorsqu'il s'agit d'un porte-monnaie électronique 1, comporte des moyens de mémorisation non permanente 18 de "monnaie électronique" destinés
- à un chargement de monnaie électronique par des moyens de chargement 19 qui font partie du terminal de rechargement 3 et qui peuvent être libérés par les moyens de blocage 15 de ce dernier lors d'une validation du porte monnaie 1 par ce terminal 3, et
- à un prélèvement de monnaie électronique par des moyens de prélèvement 20 qui font partie du terminal de prélèvement 2 et qui peuvent être libérés par les moyens de blocage 15 de ce dernier lors d'une validation du porte-monnaie 1 par ce terminal 2.

Dans une forme de réalisation avantageuse de l'invention, l'agencement ci-dessus comporte en outre :
- des moyens de numérotation 21A, 21B pour donner à chaque nouvelle clé K1(p) un numéro d'ordre (p) dans la succession de la production de ces clés, des premiers moyens de numérotation 21A pouvant être raccordés aux moyens de production 12 précités et être situés au centre de gestion 1 pour fournir le numéro (p) de la nouvelle clé K1(p) pour la période (p), des seconds moyens de numérotation 21B pouvant être raccordés aux moyens de répétition 13 pour en tirer le numéro d'ordre (p-n') d'une clé K2(p-n') plus récente choisie pour remplacer la clé K2(p-n) stockée dans les moyens de stockage 17,
- dans le premier dispositif 7, dans les terminaux 2 et 3, des moyens de mémorisation 22 d'au moins le numéro d'ordre (p) de la dernière clé stockée K1(p), ces moyens 22 pouvant éventuellement effacer un ou des numéros d'ordre précédents de clés supprimées, ces moyens 22 étant reliés aux moyens de numérotation 21A et éventuellement aussi 21B pour recevoir de ces derniers le numéro d'ordre (p-n') approprié,
- dans le second dispositif 8, des moyens de mémorisation 23 du numéro d'ordre (p-n) de la clé K2(p-n) stockée dans les moyens de stockage 17, ces moyens 23 pouvant être mis en correspondance avec les moyens 21B pour recevoir ledit numéro d'ordre (p-n), et
- des moyens de détermination 24 du nombre de répétitions de la fonction irréversible F nécessaires pour passer de la clé renouvelée K1(p), stockée dans le premier dispositif 7 et comportant le numéro d'ordre (p), à la clé K2(p-n) stockée dans le second dispositif 8 et comportant un numéro d'ordre (p-n) inférieur.

Ces moyens de détermination 24 sont reliés aux moyens de répétition 13 pour leur indiquer le nombre de répétitions de la fonction F avant de passer à une comparaison de clés K1, K2, et ils peuvent être reliés aux moyens de mémorisation 22 du dispositif 7, et mis en correspondance avec les moyens de mémorisation 23 du dispositif 8 pour tirer de ces derniers les numéros d'ordre mémorisés.

L'homme de métier moyen peut choisir les composants nécessaires pour l'établissement du système de sécurité 6, par exemple les dispositifs de mise en mémoire et de lecture pour les différents moyens de stockage et de mémorisation 17, 18 et 23 du porte-monnaie électronique 1.

Il doit être entendu que l'invention n'est nullement limitée aux formes de réalisation décrites et que bien des modifications peuvent être apportées à ces dernières sans sortir du cadre de la présente invention.

Par exemple seuls des moyens de couplage (non représentés) avec le porte-monnaie électronique 1 pour sa validation et son rechargement doivent rester dans ledit terminal de rechargement 3. Au moins une partie des autres moyens précités de stockage 11, de répétition 13, de comparaison 14, de blocage d'accès 15, de remplacement 16, de chargement 19, de numérotation 21B et/ou de mémorisation 22 peuvent éventuellement être agencés au centre de gestion 5 et dans ce cas, les moyens 21A et 21B de numérotation peuvent n'être formés que par les moyens 21A. Ceci peut être préféré puisque usuellement les terminaux de rechargement 3 sont constamment en ligne avec le centre de gestion 5.

De préférence, la comparaison des clés K1 et K2 n'est pas directe mais a lieu par une technique cryptographique usuelle, par exemple par la technique dite "challenge-response" ou par une des techniques définies dans les standards internationaux ISO/IEC 9798-2 ou pr EN1546 connus de l'homme de métier.

## Revendications

1. Procédé pour donner sélectivement un accès dans un système de sécurité (6), le système (6) comportant au moins un premier dispositif (7) et au moins un second dispositif (8) qui doivent être mis en correspondance pour obtenir l'accès et l'accès étant obtenu par vérification de ce qu'une clé cryptographique (K2) que comporte le second dispositif (8) est reconnue comme étant valide par le premier dispositif (7), après une comparaison à une clé (K1) que ce dernier comporte, le procédé comprenant:
- un renouvellement successif, à des intervalles de temps choisis, de la clé (K1) du premier dispositif, la nouvelle clé (K1(p)) de celui-ci étant liée à la précédente (K1(p-1)) par une fonction (F),
- si la comparaison de la clé renouvelée (K1(p)) du premier dispositif (7) et de la clé (K2(p-n))du second dispositif (8) ne vérifie pas que cette dernière est valide, une recherche successive, par l'intermédiaire de la fonction (F) répétée, des clés précédentes (K1(p-n)) du premier dispositif (7) pour les comparer successivement à celle (K2(p-n)) du second dispositif, et
- si cette comparaison successive ne vérifie pas la validité de la clé du second dispositif (8), un blocage de l'accès,
le procédé étant caractérisé en ce que la fonction (F) est irréversible et choisie de façon à ce qu' à partir d'une clé (K1(p)) déterminée, on ne peut obtenir chaque fois que la clé précédente (K1(p-1)) dans la succession du renouvellement et, par répétition de la fonction (F), les clés précédentes éventuelles.

2. Procédé suivant la revendication 1, caractérisé en ce qu'il comporte, si la comparaison successive vérifie la validité de la clé (K2(p-n)) du second dispositif (8), outre une libération de l'accès, un remplacement de la clé (K2(p-n)) de ce second dispositif par une des clés (K2(p-1)) du premier dispositif, plus récente que celle du second.

3. Procédé suivant l'une ou l'autre des revendications 1 et 2, caractérisé en ce que les recherche et comparaison successives de clés précédentes (K1(p-n)) du premier dispositif sont bloquées à partir d'un degré d'ancienneté déterminé (m).

4. Procédé suivant l'une quelconque des revendications 1 à 3, caractérisé en ce qu'il comportera
- une numérotation, dans l'ordre, des clés successives utilisées, liées par la fonction irréversible (F),
- une inscription dans le premier dispositif (7) et dans le second dispositif (8) d'un numéro d'ordre (p-n) correspondant dans la succession à la clé (K1(p-n), K2(p-n)) que chaque dispositif (7, 8) comporte et
- une utilisation du numéro d'ordre (p-n) pour la recherche successive, éventuellement pour déterminer un degré d'ancienneté (m) au-delà duquel sont bloquées la recherche et la comparaison.

5. Procédé suivant une quelconque des revendications 1 à 4, caractérisé en ce qu'il est mis en oeuvre dans un système de payement par carte de débit, de crédit, ou par prélèvement de valeurs monétaires contenues dans une carte (1) dite intelligente, en particulier une carte à puce.

6. Agencement pour la mise en oeuvre du procédé suivant l'une quelconque des revendications 1 à 5, comportant au moins un premier dispositif (7) et au moins un second dispositif (8),
* le second dispositif (8) comportant des moyens de stockage d'une clé (17),
* le premier dispositif (7) comportant
- des moyens de stockage (11) d'une clé (K1(p-1)),
- des moyens de production (12) d'une nouvelle clé (K1(p)) pour le premier dispositif (7), ces moyens de production (12) étant reliés aux moyens de stockage (11) pour y remplacer une clé (K1(p-1)) par la nouvelle clé (K1(p)) et étant agencés pour que la nouvelle clé soit chaque fois liée à la précédente par une fonction irréversible (F) par laquelle, à partir d'une clé déterminée on ne peut obtenir chaque fois que la clé précédente dans la succession du renouvellement et, par une répétition de la fonction (F), les clés précédentes éventuelles,
- des moyens de répétition (13) de la fonction irréversible (F) pour retrouver successivement les clés précédentes (K1(p-n)) du premier dispositif (7), ces moyens de répétition (13) étant reliés aux moyens de production (12), et/ou aux moyens de stockage (11),
- des moyens de comparaison (14) des clés renouvelée (K1(p)) et précédentes (K1(p-n)) du premier dispositif (7) et de la clé (K2(p-n)) du second dispositif (8), ces moyens de comparaison (14) étant reliés aux moyens de stockage (11) et de répétition (13),
- des moyens de blocage (15) de l'accès reliés aux moyens de comparaison (14), et
- des moyens de remplacement (16) éventuel de la clé stockée (K2(p-n)) dans les moyens de stockage (17) du second dispositif (8) par une clé plus récente (K2(p-n')) dans la succession du renouvellement des clé, ces moyens de remplacement (16) étant raccordés aux moyens de répétition (13) et aux moyens de blocage (15).

7. Agencement suivant la revendication 6, caractérisé en ce qu'il comporte en outre
- des moyens de numérotation (21A, 21B) de chaque clé renouvelée (K1(p-n), K2(p-n)) du premier dispositif (7), éventuellement raccordés aux moyens de production (12) précités et/ou aux moyens de répétition (13) susdits pour donner à la clé (K1(p-n), K2(p-n)) un numéro d'ordre dans la succession de la production de clé,
- tant dans le premier que dans le second dispositif (7, 8), des moyens de mémorisation (22, 23) d'au moins le numéro d'ordre (p-n) de la dernière clé stockée (K1(p-n), K2(p-n)), ces moyens de mémorisation étant agencés pour un effacement éventuel d'un ou de numéros d'ordre précédents, et
- reliés aux moyens de répétition (13), des moyens de détermination (24) du nombre de répétitions de la fonction irréversible (F), pour passer de la clé renouvelée (K1(p)), stockée dans le premier dispositif (7) et comportant un numéro d'ordre (p), à la clé (K2(p-n)) stockée dans le second dispositif (8) et comportant un numéro d'ordre (p-n) inférieur.

## Patentansprüche

1. Verfahren zum Ermöglichen von selektivem Zugang in ein Sicherheitssystem (6), wobei das System (6) mindestens eine erste Einrichtung (7) und mindestens eine zweite Einrichtung (8) enthält, die in Verbindung miteinander gebracht werden müssen, um den Zugang zu erhalten, wobei der Zugang dadurch erhalten wird, daß ein Verschlüsselungsschlüssel (K2), den die zweite Vorrichtung (8) beinhaltet, durch die erste Vorrichtung (7) als gültig erkannt wird, nach Vergleich mit einem Schlüssel, welchen diese beinhaltet, wobei das Verfahren umfaßt:
- eine aufeinanderfolgende Erneuerung, in ausgewählten Zeitabschnitten, des Schlüssels (K1) der ersten Vorrichtung, wobei deren neuer Schlüssel (K1(p)) über eine Funktion (F) mit dem vorhergehenden Schlüssel (K1(p-1)) verbunden ist,
- wenn der Vergleich des erneuerten Schlüssels (K1(p)) der ersten Vorrichtung (7) und des Schlüssels (K2(p-n)) der zweiten Vorrichtung (8) nicht ergibt, daß der letztgenannte Schlüssel gültig ist, eine aufeinanderfolgende Überprüfung, mittels der wiederholten Funktion (F), der vorhergehenden Schlüssel (K1(p-n)) der ersten Vorrichtung (7), um sie in aufeinanderfolgender Weise mit dem (K2(p-n)) der zweiten Vorrichtung zu vergleichen, und
- wenn dieser aufeinanderfolgende Vergleich nicht die Gültigkeit des Schlüssels der zweiten Vorrichtung (8) ergibt, eine Blockierung des Zugangs,
wobei das Verfahren dadurch gekennzeichnet ist, daß die Funktion (F) unumkehrbar und so ausgewählt ist, daß man ausgehend von einem bestimmten Schlüssel (K1(p)) jedesmal nur den vorhergehenden Schlüssel (K1(p-1)) in der Abfolge der Erneuerung erhalten kann, und durch Wiederholung der Funktion (F) die eventuellen vorhergehenden Schlüssel.

2. Verfahren nach Anspruch 1, dadurch gekennzeichnet, daß dieses, wenn der aufeinanderfolgende Vergleich die Gültigkeit des Schlüssels (K2(p-n)) der zweiten Vorrichtung (8) ergibt, außer einer Freigabe des Zugangs eine Ersetzung des Schlüssels (K2(p-n)) der zweiten Vorrichtung durch einen der Schlüssel (K2(p-1)) der ersten Vorrichtung umfaßt, der aktueller ist als der der zweiten.

3. Verfahren nach einem der Ansprüche 1 oder 2, dadurch gekennzeichnet, daß die aufeinanderfolgenden Such- und Vergleichsvorgänge der vorhergehenden Schlüssel (K1(p-n)) der ersten Vorrichtung von einem bestimmten Altersrang (n) an blockiert sind.

4. Verfahren nach einem der Ansprüche 1 bis 3, dadurch gekennzeichnet, daß es umfaßt:
- eine Numerierung, der Reihe nach, der aufeinanderfolgenden verwendeten Schlüssel, die durch die unumkehrbare Funktion (F) verbunden sind,
- eine Einspeicherung in der ersten Vorrichtung (7) und in der zweiten Vorrichtung (8) einer Ordnungszahl (p-n), die in der Aufeinanderfolge dem Schlüssel (K1(p-n), K2(p-n)) entspricht, den jede Vorrichtung (7, 8) enthält, und
- eine Verwendung der Ordnungzahl (p-n) für die aufeinanderfolgende Suche, eventuell zum Bestimmen eines Altersrangs (m), jenseits dessen die Suche und der Vergleich blockiert sind.

5. Verfahren nach einem der Ansprüche 1 bis 4, dadurch gekennzeichnet, daß es in einem Zahlungssystem mittels Zahlungs- oder Kreditkarte oder mittels Abhebung von in einer als intelligent bezeichneten Karte (1), insbesondere einer Chipkarte, enthaltenen Geldwerten eingesetzt wird.

6. Vorrichtung zur Ausführung des Verfahrens nach einem der Ansprüche 1 bis 5, mit zumindest einer ersten Einrichtung (7) und zumindest einer zweiten Einrichtung (8), wobei
* die zweite Einrichtung (8) Mittel zum Speichern eines Schlüssels (17) aufweist,
* die erste Einrichtung (7) umfaßt
- Mittel zum Speichern (11) eines Schlüssels (K1(p-1)),
- Mittel zur Erzeugung (12) eines neuen Schlüssels K1(p)) für die erste Einrichtung (7), wobei diese Erzeugungsmittel (12) mit den Speicherungsmitteln (11) verbunden sind, um dort einen Schlüssel (K1(p-1)) durch den neuen Schlüssel (K1(p)) zu ersetzen, und dafür eingerichtet sind, daß der neue Schlüssel jedesmal mit dem vorangehenden Schlüssel durch eine unumkehrbare Funktion (F) verbunden ist, durch die man, ausgehend von einem vorbestimmten Schlüssel, jedesmal nur den vorangehenden Schlüssel in der Abfolge der Erneuerung erhalten kann, und durch Wiederholung der Funktion (F) die eventuellen vorangehenden Schlüssel,
- Mittel zur Wiederholung (13) der unumkehrbaren Funktion (F), um die vorangehenden Schlüssel (K1(p-n)) der ersten Einrichtung (7) aufzufinden, wobei die Mittel zur Wiederholung (13) mit den Erzeugungsmitteln (12) und/oder den Speicherungsmitteln (11) verbunden sind,
- Mittel zum Vergleich (14) des erneuerten (K1(p)) und der vorangehenden Schlüssel (K1(p-n)) der ersten Einrichtung (7) und des Schlüssels (K2(p-n)) der zweiten Einrichtung (8), wobei diese Vergleichsmittel (14) mit den Speicherungsmitteln (11) und den Wiederholungsmitteln (13) verbunden sind,
- Mittel zur Blockierung (15) des Zugangs, die mit den Vergleichsmitteln (14) verbunden sind, und
- Mittel zum eventuellen Ersetzen (16) des in den Speicherungsmitteln (17) der zweiten Einrichtung (8) gespeicherten Schlüssels (K2(p-n)) durch einen in der Abfolge der Erneuerung der Schlüssel neueren Schlüssel (K2(p-n')), wobei diese Ersetzungsmittel (16) mit den Wiederholungsmitteln (13) und den Blockierungsmitteln (15) verbunden sind.

7. Vorrichtung nach Anspruch 6, gekennzeichnet durch
- Numerierungsmittel (21A, 21B) jedes erneuerten Schlüssels (K1(p-n), K2(p-n)) der ersten Vorrichtung (7), eventuell angeschlossen an die vorgenannten Erzeugungsmittel (12) und/oder an die genannten Wiederholungsmittel (13), um dem Schlüssel (K1(p-n), K2(p-n)) eine Ordnungszahl in der Abfolge der Erzeugung der Schlüssel zu geben,
- sowohl in der ersten als auch in der zweiten Vorrichtung (7, 8) Speicherungsmittel (22, 23) zumindest der Ordnungszahl (p-n) des letzten gespeicherten Schlüssels (K1(p-n), K2(p-n)), wobei diese Speicherungsmittel für eine eventuelle Löschung einer oder mehrerer vorangehender Ordnungszahlen eingerichtet sind, und
- verbunden mit den Wiederholungsmitteln (13), Bestimmungsmittel (24) der Anzahl von Wiederholungen der unumkehrbaren Funktion (F), um von dem erneuerten Schlüssel (K1(p)), der in der ersten Vorrichtung (7) gespeichert ist und eine Ordnungszahl (p) trägt, zu dem in der zweiten Vorrichtung (8) gespeicherten Schlüssel (K2(p-n)) zu gelangen, der eine kleinere Ordnungszahl (p-n) trägt.

## Claims

1. A process for providing selective access within a security system (6), this system (6) comprising at least one first device (7) and at least one second device (8) which are placed in correspondence in order to obtain access, and this access being obtained by verification that a coded key (K2), in a second device (8), is recognised as valid by the first device (7), after comparing it with key (K1) which is found in the latter, the process comprising
- a successive renewal, at planned intervals, of the key (K1) in the first device, the new key (K (p)) of the first device being linked to the preceding one (K1(p-1)) by a function (F),
- if the comparison of the renewed key (K1(p)) of the first device (7) and the key (K2(p-n)) of the second device (8) does not verify that the latter is valid, there will be a successive search, using the repeated function (F), of the previous keys (K1(p-n)) of the first device (7) in order then to compare them with that (K2(p-n)) of the second device, and
- if this successive comparison does not verify the validity of the key of the second device (8), access will be barred, the process being characterised in that the function (F) is irreversible and selected so that, on the basis of a given key (K1(p)), it is only possible in each instance to obtain the preceding key (K1(p-1) in the renewal sequence and, by repeating this function (F), any earlier keys.

2. A process in accordance with Claim 1,
characterised in that, if the successive comparison verifies the validity of the key (K2(p-n)) of the second device (8), in addition to granting access, it will also replace the key (K2(p-n)) of this second device by one of the keys (K2(p-1)) of the first device, more recent than that of the second.

3. A process in accordance with either of Claims 1 and 2, characterised in that the successive search and comparison of the previous keys (K1(p-n)) of the first device are barred as from a certain degree of age (m).

4. A process in accordance with any of Claims 1 to 3, characterised in that it includes:
- numbering, in order, of the successive keys used, linked by the irreversible function (F),
- the recording, in the first device (7) and in the second device (8), of a sequential number (p-n) corresponding in succession to the key (K1(p-n)), K2(p-n) given to each device (7,8), and
- the use of a sequential number (p-n) for the successive search, possibly for the purpose of determining a degree of age (m) beyond which search and comparison are barred.

5. A process in accordance with any of Claims 1 to 4, characterised in that it is implemented in a payment system using debit cards, credit cards or the withdrawal of funds held on a so-called smart card (1), and more particularly on a chip card.

6. An arrangement for implementing the process in accordance with any of Claims 1 to 5, comprising at least one first device (7) and at least one second device (8),
* the second device (8) comprising the means for storing a key (17);
* the first device (7) comprising
- storage means (11) for a key (K1(p-1));
- means of producing (12) a new key (K1(p)) for the first device (7), these means of production (12) being linked to the storage means (11) for replacement of the key (K1(p-1)) therein by the new key (K1(p)) and being set up so that the new key is linked, in each instance, by an irreversible function (F), whereby, on the basis of a given key it is only possible in each case to obtain the preceding key in the renewal sequence and, by repetition of function (F), any previous keys;
- means of repetition (13) of the irreversible function (F) in order to find, in sequence, the previous keys (K1(p-n)) of the first device (7), these means of repetition (13) being linked to the means of production (12), and/or to the storage means (11);
- means of comparison (14) of the renewed keys (K1(p)) and the previous keys (K1(p-n)) of the first device (7) and of the key (K2(p-n)) of the second device (8), these means of comparison (14) being linked to the storage means (11) and means of repetition (13);
- means of barring access (15) linked to the means of comparison (14), and
- means of replacement (16), where appropriate, of the stored key (K2(p-n)) in the means of storage (17) of the second device (8) by a more recent key (K2(p-n')) in the key renewal sequence, these means of replacement (16) being linked to the means of repetition (13) and to the means of barring access (15).

7. An arrangement in accordance with Claim 6,
characterised in that it also has
- means of numbering (21A, 21B) each renewed key (K1(p-n)), K2(p-n) of the first device (7), possibly linked to the aforesaid means of production (12) and/or to the aforesaid means of repetition (13) in order to give to the key (K1(p-n), K2(p-n)) a sequential number in the key production sequence,
- both in the first and in the second devices (7, 8) means of storage/memorisation (22, 23) of at least the sequential number (p-n) of the last key stored (K1(p-n), K2(p-n)), these means of storage being arranged for the possible deletion of one or more earlier sequential numbers, and
- linked to the means of repetition (13), the means of determining (24) the numbers of repetitions of the irreversible function (F), for the purpose of switching from the renewed key (K1(p)), stored in the first device (7) and consisting of a sequential number (p), to the key (K2(p-n)) stored in the second device (8), and comprising a lower sequential number (p-n).
